# EUROPEAN PATENT APPLICATION

(11) **EP 0 594 522 A1**
(43) Date of publication of application: **27.04.1994**
(21) Application number: 93480139.0
(22) Date of filing: 21.09.1993
(51) Int. Cl.: G11B 21/08

(54) **Disk drive servo system**

(30) Priority: 23.10.1992 US 965660
(71) Applicant: INTERNATIONAL BUSINESS MACHINES CORPORATION, Armonk, N.Y. 10504 (US)
(72) Inventor: Boutaghou, Zine-Eddine, Rochester, Minnesota 55906 (US); Mrad, Fouad Toufic, Rochester, Minnesota 55901 (US)
(74) Representative: de Pena, Alain

(57) **Abstract**

A data storage device such as a disk drive has a servo system which includes a microaccelerometer mounted on either the transducer carrying slider (including an microaccelerometer integrated into the slider as a part of slider fabrication) or on an actuator suspension flexure element in close proximity to the slider. By obtaining actual values of horizontal acceleration (parallel to the plane of the media) which are integrated to obtain velocity, very accurate velocity and acceleration values are available for servo control to thereby eliminate inaccuracies in velocity and acceleration values used by present systems which must tolerate errors introduced by measured variables ; unmeasurable variables and modeled and unmodeled factors or signals. Further the present use of an estimator to establish an estimated velocity adds processing overhead requirements in addition to the use of an imprecise value.

## Description

This invention pertains to data storage devices wherein information is stored on adjoining tracks and more particularly to an improved servo system for moving transducers from track to track or maintaining a transducer in alignment with a desired track in such a device.

The trend in future disk drive data storage devices is for smaller, portable, less costly, higher storage capacity and more reliable products. The quest for high- erdensity results in lower transducer head fly heights, a smaller squeeze factor, more critical seek-settle times and more sensitivity to both internal and external disturbances. The new portable applications require more shock resistance and disturbance rejec- tion/awareness from the servo system.

The servo system that positions the transducers with respect to a desired data track through the control of t he voice coil motor t hat carries t he transducers may take several forms. The most common techniques for determining head velocity and/or acceleration is to either differentiate position information or estimates the velocity as an internal state of the plant via a model based observer. The use of the differentiation technique requires the prediction of head future positions which is achieved in practice using numerical analysis techniques such as Euler second order. With an available head position signal, a numerical differentiation can be executed. This differentiation estimation is very noisy and unstable and induces many errors. The other approach for estimating this internal state consists of building a model based observer for generating estimates of the observable states. This last approach is more popular and reliable. However, this second approach remains only an estimation that depends greatly on the validity of the actuator model and requires the actual input current of the plant that is not measured, but assumed to be close to the prior control state. Both of these techniques require successive samples and calculations that require time and extend the overhead of the control system. The use of integrated coil current requires fewer calculations, but is more subject to inaccuracies induced by system noise. Any of these approaches must also tolerate and account for extraneous factors. A principle example is the bias on the actuator induced by unmodeled forces in the enclosure including the flat cable or cables that carry current to the voice coil and afford data and servo communication with the transducers. These cables normally exert a bias on the actuator that varies with the radial position of the transducers and adds a dynamic bias force in both motion directions of this arm.

The effectiveness and accuracy of existing approaches to servo control is questionable in future products based on the higher performance needed from the servo loop with higher track densities, shorter seek times, smaller size as form factors are progressively reduced below the present 2.5 inch devices and greater adaptive capabilities with portable applications. The futuristic small drive will exert a very short range of operation for the traveling transducer carrying head from the inner diameter to the outerdi- ameter. While this fact is welcomed to reduce the data seek time, the shrinkage in dimensions will mean, for example, smaller ranges of input and output that drive the model based observer needed to estimate the head linear velocity state. Hence, the system may not be sufficiently persistently excited for a unique or good estimation of the states. Furthermore, equating the delay control variable to the actual required acceleration state in the feedback loop is based on a perfect model and well known parameters assumption which is utilized routinely to control the settle time and response.

The use of an accelerometer to obtain true values of head acceleration that can be integrated to obtain velocity values would avoid the exposure to multiple variables, many of which cannot be accurately compensated or in some cases even observed. Past applications of accelerometers used in conjunction with disk drives have been utilized to sense acceleration in a vertical direction to observe the presence and severity of asperities or encountered particles and enable a determination of possible imminent failure or remaining life of the disk drive as indicated by degrading conditions.

Japanese patent JP 60-124073 shows the use of accelerometers mounted on the actuator arm in two planes to measure the impact power as the actuator armature strikes the inner or outer crash stops.

US patent 3,836,835 includes one embodiment wherein an accelerometer is used in a system for controlling the operation of a synchronous planar motor with digital velocity feedback. The patent is directed to the use of an accelerometer on the motor that is traveling in the directions ofX and Ycoordinates without available position information. The application is a robot or assembly table, not a data storage device. The obtained acceleration (in both directions Xand Y) is the acceleration of the moving assembly (i.e., head, actuator, end effector) with respect to the stationary part (the platen). In the disk drive application of the present invention, a microaccelerometer is used to obtain the linear acceleration of a carried part (the transducer head) and not the rotational acceleration of the controlled voice coil motor.

By using an accelerometer which is mounted directly on one of the transducer carrying sliders or on one of the head suspensions, a direct feedback of actual acceleration is provided to the controller. This actual acceleration signal can also be supplied directly to the observer to improve estimates in a device that requires an observer for bias state estimate use in the controller. However, in the environment of the invention, an observer can be eliminated. Thus the dependency of the used acceleration signals on the model parameters and disturbances is eliminated resulting in a more robust overall control scheme. In addition, the velocity signals will be better computed with the actual integration of the acceleration. As indicated above, it is possible to eliminate the observer block, since most applications do not require the other observed state, namely the bias signal, in the controller, especially when the velocity state is a direct integration of the actual acceleration signal. These advantages can lead to better control of the seek and track follow functions, which can be translated into higher storage density.

The use of an accelerometer is also more effective in sensing and compensating for outside disturbances such as vibration or shock caused by jarring or dropping the device. The accelerometer can detect sudden disturbances that cause track misregistration and suspend the reading or writing of data more quickly than systems that sense and compensate only after the offtrack condition has occurred. Thus, when writing data, it is possible to intervene and suspend the write operation before adjoining data is destroyed.

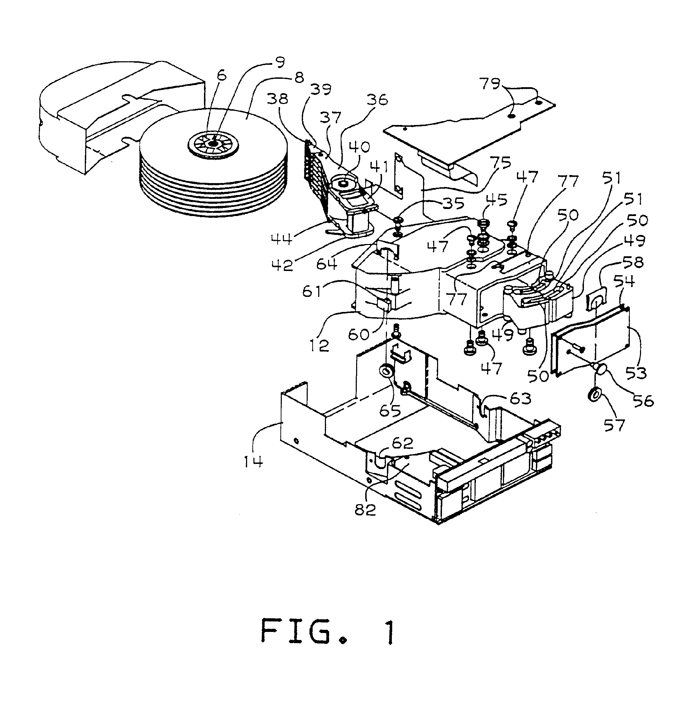

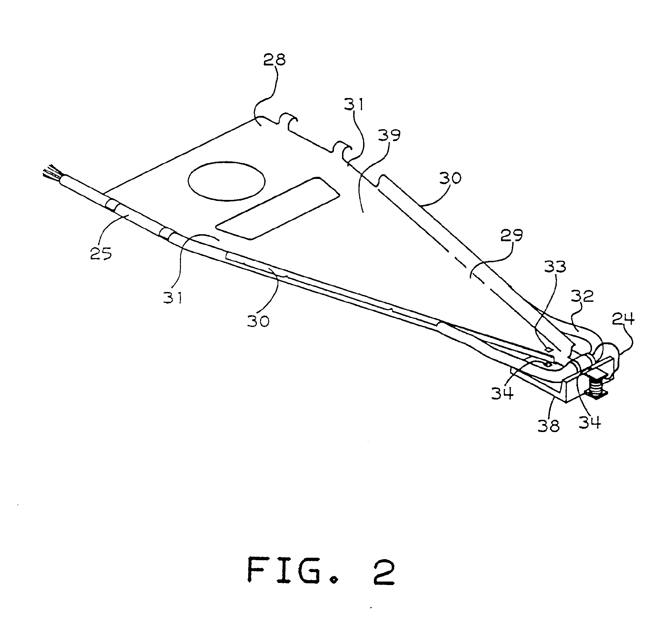

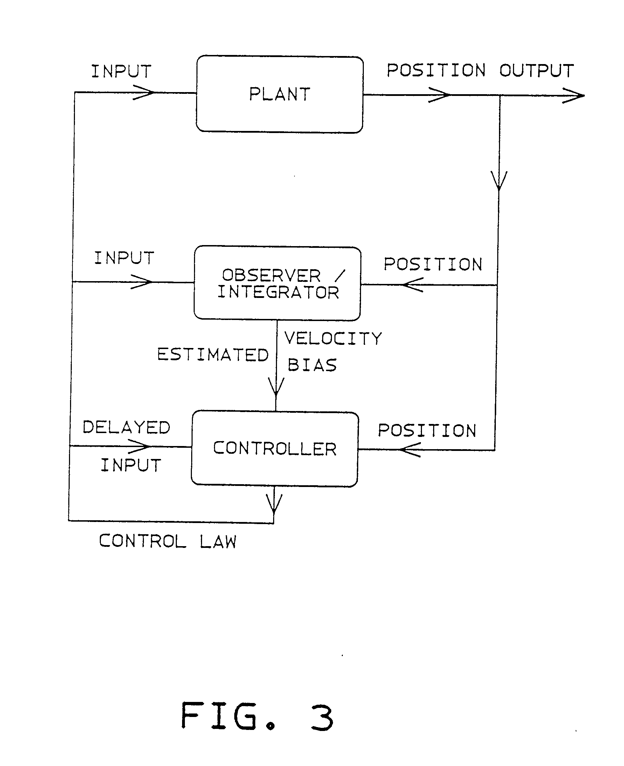

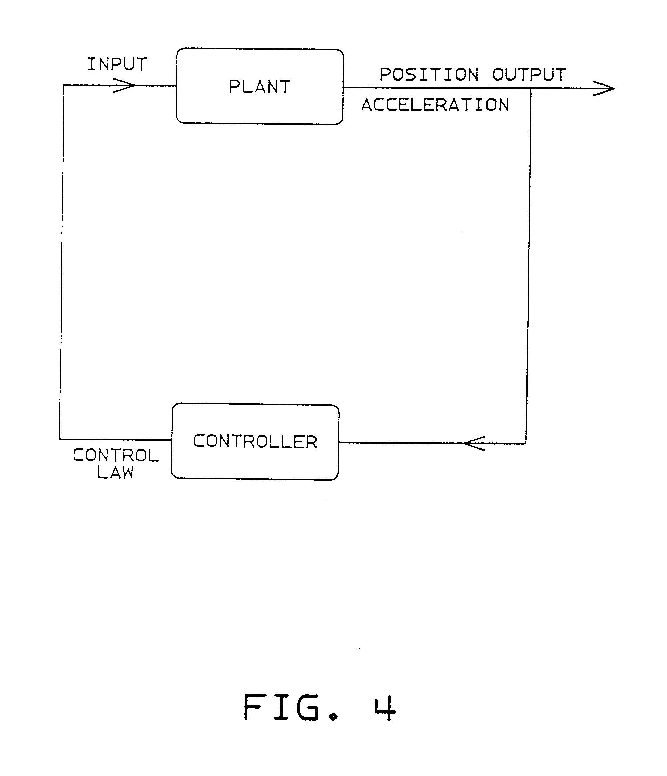

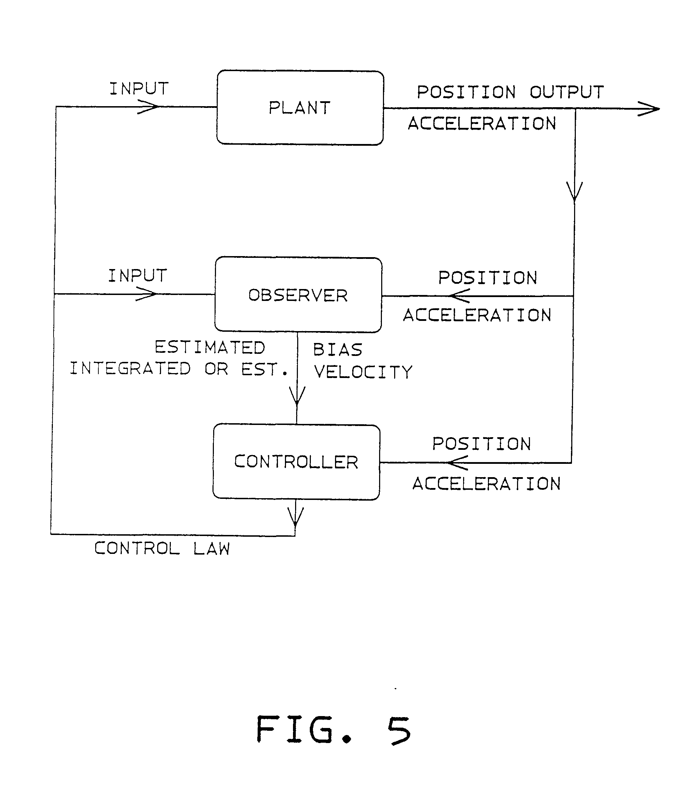

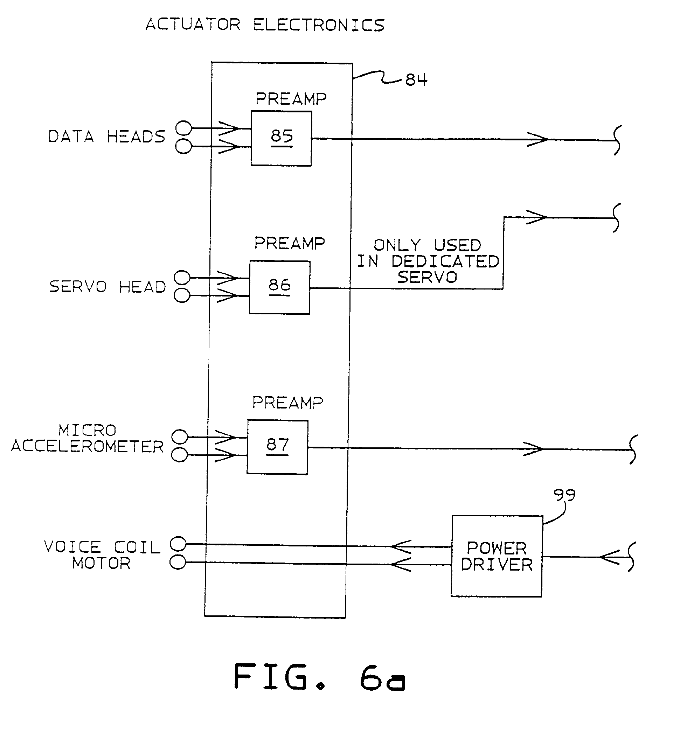

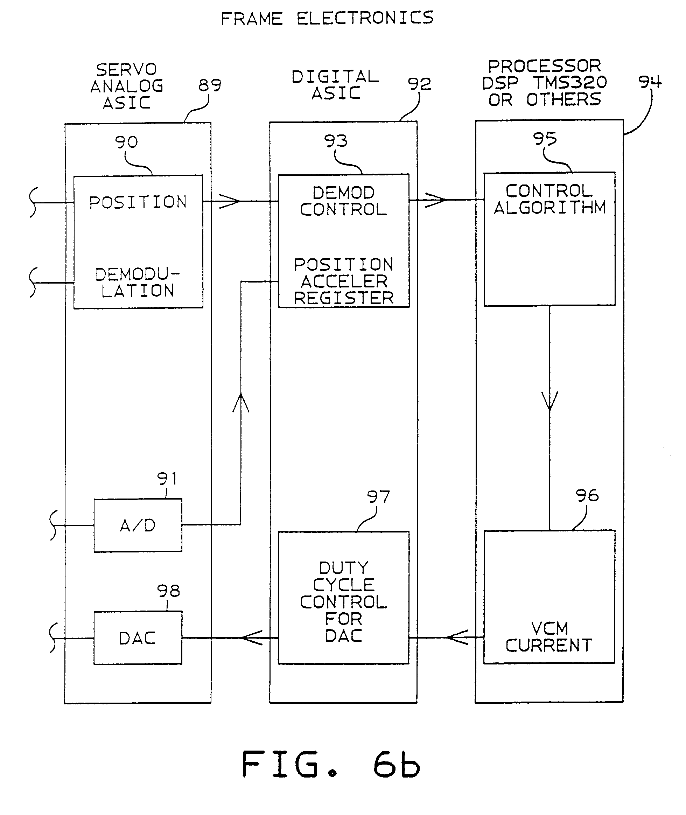

Fig. 1 shows an exploded view of a typical magnetic data storage disk drive including the head-disk assembly. Fig. 2 is an enlarged view of the head-suspension assembly incorporating a microaccelerometer. Fig. 3 is a block diagram of a prior art disk drive actuator motor control system. Fig. 4 is a block diagram of a disk drive actuator motor servo control system incorporating the present invention. Fig. 5 is a block diagram, similar to Fig. 4, wherein the observer has been retained. Fig. 6 is a lower level block diagram of Fig. 4 illustrating the control system of the present invention in greater detail.

Fig. 1 shows the organization of a typical disk drive mounted on a frame 14. The disks 8 are amounted about a hub 6 which contains the spindle drive motor (not shown). The spindle shaft 9, which forms a part of the stator of the spindle drive motor, is secured at each end to the box frame 12 by bolts (one of which is shown). The actuator body 36 has a comb portion that presents a series of arms 37. The uppermost and lowermost arms 37 carry a single transducer 38 and resilient suspension 39 which respectively confront the upper and lower disk surfaces of the disk stack 8 while each intermediate arm extends between confronting disk surfaces and carries two transduc- er/suspension assemblies.

At the opposite side of the shaft 40 the body 36 carries projections 41,42 which support the voice coil motor coil 44. Actuator shaft 40 is secured to box frame 12 by an upper bolt 45 and a similar lower bolt that is not visible. Also mounted on box frame 12 by a series of bolts 47 are a pair of voice coil motor core elements 49 in the form of members having an E shaped cross section which abut one another and which have permanent magnets 50 attached thereto. This core assembly provides an air gap 51 across which a magnetic field is maintained and in which the vertically extending stretches of the voice coil 44 are positioned. A cover 53 and gasket 54 are secured to the end of box frame 12 to cover and seal the end.

A shock mount pin 54 is mounted on cover 53. The shank portion of pin 56 is surrounded by an elastomer ring 57 and received in a U-shaped recess (not visible) in the wall of frame 14 and retained therein by a clip 58. Box frame projection 60 includes a shank 61 which is surrounded by an elastomer ring 65 and received in U-shaped frame recess 62 where it is retained by clip64. A similar shock mount assembly, carried by box frame 12, is received in the U-shaped recess 63.

The transducer coils and accelerometer are connected to the drive electronics by a flat cable 75 which extends from the actuator body 12 to a connector outside the head disk enclosure partly defined by the box frame 12.

Fig. 2 is an enlarged view of the head-suspension assembly including suspension 39 and transducer head 38. Suspension 39 is formed of thin resilient metal and is mounted to the actuator arm 37 at a rearward position 28. The forward flexure portion 29 is rigidified by turning marginal portions to form flanges 30 while flexibility is provided by the intermediate flat portions 31. The distal end of the flexure portion 29 serves as a load beam which functions with the gimbal spring 32 to interconnect the transducer head 38 and the flexure 39 and provide for pitch and roll of the head 38 with respect to load beam portion 29. This mounting technique is shown and more fully described in US Patent 4,167,765. Wires 24 from the transducer coil pass through a snare tube 25 which extends along one side of flexure 39, to interconnect the transducer coil with the flat cable 75.

A microaccelerometer is attached to the actuator either on one of the suspensions 39 in close proximity to the transducer carrying slider as illustrated by the dotted line position 33 or on the upper surface of one of the sliders as indicated by the positions 34 possibly by integrating the accelerometer with the slider during head manufacture. The accelerometer is used to measure horizontal acceleration, that is, acceleration in a direction parallel to the media surface. The preferred structure is to have the accelerometer integrated into the head assembly and vertically aligned above the transducing gap. When necessary to position the accelerometer with a linear offset from the transducer gap, a linear constant transformation is used to correct the sensed values. These acceleration sensing devices, fabricated from silicon and/or quartz using wafer technology have no moving parts and further require no parts assembly, have reduced cost, power consumption and size and are so miniaturized that viewing is effected using a microscope.

Current state of the art microaccelerometers have dimensions of about 100 microns in each dimension (length, width and height) and can be hybrid devices to provide accurate sensing of both lowfrequen- cy and high frequency acceleration. Piezoelectric (change in charge) sensing is used for measuring high frequency acceleration and capacitive (change in capacitor value) sensing is used to measure lowfre- quency acceleration to afford a device with a wide frequency capability. Using cantilevered beam technology, the hybrid microaccelerometer can be fabricated using standard CMOS wafer processing.

In Fig. 3 (and Figs. 4 and 5) the PLANT is the electromechanical assembly of the drive actuator. The diagram of Fig.2 illustrates the typical current design servo system utilizing estimated velocity and bias signals. Based on the dynamical model of the voice coil motor and using the input/output/reference signals of the plant, the velocity and bias signals are observed (estimated). Further, the acceleration is assumed to be the delayed input (delayed control state) and used to generate the control signal. This assumption about the acceleration is not robust in the presence of model/parameter uncertainties. In addition, the same assumption becomes ill justified in the presence of external and internal disturbances in small form factor hard disk drives as they may be applied in portable computer applications.

It can be appreciated that many inaccuracies are introduced into the estimator model in the typical disk drive control system as a result of the number of variables involved. In an estimator model, in order to simplify the derivations, all of the states are assumed to be estimated, when in fact many are not estimated and some may be even be unobservable. Therefore, proper selection of elements of the estimator gain matrix must be made to ensure that the system is properly represented. In compensators of the reduced-order estimator type only the velocity and the bias states are actually estimated and have calculated estimator gain elements. The delayed control variable is not included in the estimator feedback as it is already determined from the previous discrete-time sample. Therefore, it does not enter into the estimator equations directly through an estimator gain element, meaning that the estimator gain element for this state must be zero. However, the estimator model accounts for the delay by using the previous control value as the state. The integral state variable is not even an observable state; therefore, the estimator gain element for this state must also be zero. Finally, the position variable is a known state that is measured during the current discrete-time sample and is used to generate the variables that are actually being estimated.

The block diagram of Fig. 4 illustrates the use of the present invention in a disk drive environment. Direct feedback of actual acceleration is provided to the controller. This eliminates the dependency of the utilized acceleration on the model parameters and disturbances resulting in a more robust overall control scheme. It is advantageous to integrate the acceleration signal to generate the velocity instead of using the costly and questionable estimation of that signal. The observer block becomes unnecessary since most of today's applications do not use the uncontrollable bias state in the controller, especially when the velocity state is a direct integration of the actual acceleration signal. These advantages lead to better control of the seek and track follow which can be translated into higher storage density, better performance and improved disturbance and shock handling.

Fig. 5 illustrates the use of the invention while still using an observer in those applications wherein the uncontrollable estimated bias state is fed back by the control system design for perfect cancelation. However, in this environment, the actual measured acceleration is also fed back to the observer to eliminate the dependency on model parameters and disturbances.

The servo system block diagram of Fig. 6 shows the present invention in the environment of a disk drive having a dedicated servo surface. The actuator electronics 84, commonly called arm electronics, is usually associated with the flat cable (cable 75 of Fig. 1) that electrically connects the movable actuator assembly portion with the drive circuitry. Preamp circuits 85, 86, 87 are normally contained in a circuit module directly attached to the flat cable. The data heads and servo head are respectively connected to the preamp circuits 85 and 86 respectively with the output going to a demodulator 90 in the analog circuitry 89. The position information is retained in registers 93 of the digital circuitry 92. Simultaneously, the output of the microaccelerometer is connected to preamp 87 with the output digitized by analog to digital converter91 and stored in registers in module 93. The processor 94 includes the control algorithm 95 which uses the demodulated position and acceleration values stored in the registers of module 93 to generate a voice coil motor (VCM) control signal using circuitry 96. The VCM control signal is processed through circuit 97 and digital to analog converter 98 to enable power driver 99 to apply a current of the correct magnitude and sign to the actuator voice coil.

## Claims

1. A data storage device wherein data is stored in parallel tracks on a storage media comprising transducer means for writing data to and reading data from said storage media;
an actuator which supports said transducer means and moves said transducer means from one parallel track to another parallel track;
servo means for positioning said actuator to align said transducer means with a selected one of said parallel tracks;
said servo means including position sensing means; and
said servo means also including an accelerometer mounted on one of said transducer means and said actuator means.

2. The data storage device of claim 1 wherein said actuator includes rigid arm means and resilient suspension means wherein said resilient suspension means interconnects said transducer means and said rigid arm means; and
said accelerometer is attached to one of said transducer means and said resilient suspension means.

3. The data storage device of claim 2 wherein said accelerometer senses acceleration in a direction parallel to said storage media surface.

4. The data storage device of claim 3 wherein said servo means includes a controller which integrates values of acceleration obtained from said accelerometer to generate values of actuator velocity.

5. The data storage device of claim 4 wherein said actuator is driven by a voice coil motor and said controller utilizes values obtained from signals from said accelerometer and position values obtained from said transducer means to control the drive current to the voice coil of said voice coil motor.

6. A data storage device wherein data is stored in tracks on storage media comprising transducer means;
actuator means which supports said transducer means and is movable to relocate said transducer means from one track location to another track location;
servo means for positioning said actuator means with said transducer means in alignment with a selected track location;
said servo means including position sensing means; and
said servo means including an accelerometer mounted on one of said actuator means and said transducer means for measuring acceleration in a direction parallel to the surface of said storage media.

7. The data storage device of claim 6 wherein said transducer means comprises a transducer carrying slider and said accelerometer is a microaccelerometer mounted on said transducer carrying slider.

8. The data storage device of claim 6 wherein said actuator means includes a flexure/suspension, said transducer means includes a transducer carrying slider connected to said flexure suspension and said accelerometer is a microaccelerometer mounted on said flexure/suspension proximate to the connection between the transducer carrying slider and said flexure/suspension.

9. The data storage device of claim 7 or 8 wherein said servo means includes a controller which integrates values of acceleration from said microaccelerometer to generate values of slider velocity.

10. The data storage device of claim 9 wherein said actuator is driven by a voice coil motor and said controller uses values obtained from signals from said microaccelerometer and position values from said transducer means to control the drive current to the voice coil of said voice coil motor.
